# EUROPEAN PATENT SPECIFICATION

(11) **EP 1 432 860 B1**
(45) Date of publication and mention of the grant of the patent: **14.09.2005**
(21) Application number: 02750342.4
(22) Date of filing: 26.07.2002
(51) Int. Cl.: D04H 1/54, D04H 3/14, B29C 33/42, B29C 33/56

(54) **METHOD OF MAKING A BONDED NONWOVEN WEB**
VERFAHREN ZUR HERSTELLUNG EINES GEBUNDENEN VLIESSTOFFES
PROCEDE DE FABRICATION D'UNE BANDE DE TISSU NON TISSE

(30) Priority: 31.08.2001 US 943789
(43) Date of publication of application: 30.06.2004
(73) Proprietor: BBA Nonwovens Simpsonville, Inc., Simpsonville, SC 29681 (US)
(72) Inventor: FARRELL, Gregory, W., Hendersonville, TN 37075 (US); GILLESPIE, Jay, Darrell, Simpsonville, SC 29681 (US)
(74) Representative: Maxton Langmaack & Partner
(86) International application number: PCT/US2002/023940
(87) International publication number: WO 2003/021024

(56) References cited:
- EP-A- 0 734 827
- WO-A-90/13423
- DE-A- 19 626 997
- US-A- 3 508 991
- US-A- 5 795 651
- DATABASE WPI Section Ch, Week 200013 Derwent Publications Ltd., London, GB; Class A17, AN 2000-139798 XP002217396 & JP 11 350255 A (MITSUI CHEM INC), 21 December 1999 (1999-12-21)

## Description

### FIELD OF THE INVENTION

This invention relates to nonwoven webs and, in particular, to the manufacture of point bonded nonwoven webs.

### BACKGROUND OF THE INVENTION

Bonded nonwoven webs are widely used and well known. Such materials have been incorporated into various products, such as disposable diapers, feminine hygiene products, medical gowns and drapes, protective garments, and disposable wipes. One widely used method for bonding involves passing a web of fibers through a heated calender nip defined by a cooperating pair of rolls. The pair of calender rolls typically includes a smooth anvil roll and a patterned embossing roll. The patterned roll is formed of metal, and its outer surface has been engraved to produce a multiplicity of individual raised lands that are spaced apart from one another by intervening depressions so that the lands of the embossed roll and the outer surface of the anvil roll form a plurality of discrete areas where the nonwoven material is compressed and thermally fused together to form point bond sites in the nonwoven fabric.

This calender bonding method has been used successfully for many years in the manufacture of nonwoven webs from conventional thermoplastic polymers such as polypropylene. More recently, with the development of more advanced designs for disposable diapers, protective garments and the like, specialized nonwovens have been engineered for use in such products. For nonwovens which are intended to come into contact with the skin of the wearer, such as the topsheet component of a disposable diaper, for example, the webs have been engineered to provide softness and comfort to the wearer. Various approaches have been taken to provide the desired level of softness. For example, according to Winebarger U.S. Patent 5,057,357 the nonwoven web is thermally bonded by passing it through two successively arranged calender nips configured to provide a particular pattern of bond points that maintains softness in the bonded nonwoven. It has also been recognized that the polymers used for producing the fibers of the nonwoven web can influence the softness of the nonwoven fabric. Fowells U.S. Patent 4,644,045 teaches that a spunbond nonwoven web having excellent softness can be made from fibers of linear low density polyethylene. Gessner U.S. Patent 5,108,827 describes the production of nonwoven webs from multiconstituent fibers which can contain lower melting "softer" polymer constituents such as polyethylene. Nonwoven fabrics have also been produced from bicomponent fibers which include a higher melting polymer component, such as polypropylene, and a lower melting polymer component such as polyethylene.

A significant problem, however, is encountered when producing a point bonded nonwoven web with fibers containing a lower melting "softer" polymer such as polyethylene. Webs made from fibers of lower melting polymer materials, e.g. those that melt below about 140°C, are very difficult to bond because the temperature at which the thermoplastic fibers become sufficiently tacky or sticky to bond is very close to the melting temperature of the polymer. For such webs, there is a very narrow "window" of temperature, time and pressure conditions where acceptable bonding occurs. At the high speeds required for commercial production of nonwovens, it is extremely difficult to maintain the calender conditions within the zone required for acceptable bonding. Underbonding results in a web with poor abrasion resistance, evidenced by fuzz or fly-away filaments, and poor strength properties. Overbonding can also result in poor strength properties, as well as an undesirable loss of softness. A further significant problem occurs when the fibers melt and stick to the calender rolls, and then begin to wrap around the rolls of the calender stack. These calender stack wraps cause unwanted machine down time and wasted material. Such calender wraps often are initiated when fibers stick to the recessed depressions between the raised land points.

### SUMMARY OF THE INVENTION

The present invention overcomes the aforementioned problems and provides dramatic improvements in the ability to produce bonded nonwoven webs. It is especially useful and advantageous in addressing the aforementioned problem of bonding fibers or filaments containing lower melting polymer materials, such as those that melt below about 140°C. However, benefits arising from present invention are also realized in bonding nonwoven webs made from various other fiber-forming thermoplastic polymers.

According to one embodiment of the present invention, a nonwoven web is formed from thermoplastic fibers or filaments and the web is contacted with a patterned embossing roll having an outer surface including a multiplicity of individual raised calender lands which are spaced apart from one another by intervening depressions, wherein at least the depressions are covered by a surface coating of a fluoropolymer. Energy is transferred to the nonwoven web to cause the fibers or filaments thereof to fuse and form point bond sites in discrete areas where the web is contacted by the raised calender lands. Preferably, the raised calender lands form from 4 to 40 percent of the surface area of the embossing roll. More preferably, the raised calender lands are present at a concentration of 40 to 500 lands per square inch.

In one embodiment of the invention, the step of contacting the nonwoven web with a patterned embossing roll is carried out by directing the nonwoven web through a calender nip formed between a smooth, hard-surfaced anvil roll and the patterned embossing roll. In another embodiment, the patterned embossing roll is used in combination with an ultrasonic horn to ultrasonically bond the fabric in discrete zones.

Rolls having a surface with a release coating have been used in a number of industrial applications, such as in copying machines, in the manufacture of coated paper, and in coating and printing applications. However, these applications typically employ smooth-surfaced rolls. The rolls used in the nonwovens industry for producing a bonded nonwoven fabric have a patterned surface and have conventionally been produced by engraving or machining the metal surface of a cylindrical roll to form a pattern of discrete raised land areas surrounded by intervening depressions. Applicants have discovered that by providing a release coating, such as a fluoropolymer coating, in the depressions of such a patterned roll, significant improvements are achieved in the bonding of a nonwoven fabric. While the coating can also be applied to the raised lands of the roll, the primary benefits are achieved by having the coating present in the depressions. Surprisingly, the presence of the coating allows the nonwoven fabric to be heated to a higher temperature, producing stronger bonds and improved abrasion resistance, and the incidence of unwanted calender stack wraps is reduced.

The present invention is especially useful and advantageous in bonding a nonwoven fabric containing fibers or filaments of a lower-melting polymer, e.g. which melts below 140°C, and typically has a very narrow bonding window of acceptable bonding conditions. According to one aspect of the present invention a calender nip is formed between a smooth, hard-surfaced anvil roll and a cooperating patterned embossing roll, the patterned embossing roll including a metallic cylindrical roll core having an outer surface with a multiplicity of raised calender lands which are spaced apart from one another by intervening depressions, the raised calender lands being present at a concentration of 40 to 500 lands per square inch (6.2 to 77.5 lands per square centimeter) and forming from 4 to 40 percent of the surface area of the embossing roll, and the roll having a hard tie coating adhered to the surface of the roll core and overlying at least the depressions, and a fluoropolymer surface coating adhered to the tie coat. The cooperating rolls are rotated in opposite directions and the calander nip is maintained at a temperature of from 90 to 250 degrees C and at a pressure of 50 to 15 00 pounds per linear inch (87 to 2627 N/cm) when used with the lower melting polymer materials. The nonwoven web is directed through the calender nip and the thermoplastic fibers or filaments thereof are thermally bonded in discrete areas corresponding to the raised calender lands.

According to one embodiment, the nonwoven web comprises fibers from at least two different polymers arranged as distinct phases in the cross-section of the fiber. In particular, the fibers can be formed as a bicomponent structure, such as a sheath-core structure comprising a sheath of a polymer which melts below 140°C and a core of a polymer which melts at a higher temperature. Alternatively, the fibers can be formed from a highly dispersed blend of at least two different immiscible thermoplastic polymers comprising a dominant continuous phase polymer having a higher melting point in which is dispersed a discontinuous phase of a lower melting point polymer that melts below 140°C, and wherein the discontinuous phase polymer occupies at least a portion of the surface of the filaments.

Advantageously, the present invention can be operated at commercially acceptable processing speeds without suffering from stack wraps or other processing problems that plague conventional machines. Fun hermore, the nonwoven webs produced according to the present invention have enhanced abrasion resistance and strength, a softer hand, and an aesthetically pleasing appearance.

The present invention also provides an apparatus for producing a thermally bonded nonwoven web which comprises means for forming thermoplastic fibers or filaments into a nonwoven web and a patterned embossing roll mounted for contacting the nonwoven web. The patterned embossing roll has an outer surface including a multiplicity of individual raised calender lands which are spaced apart from one another by intervening depressions, wherein at least the depressions are covered by a surface coating of a fluoropolymer. Means is provided cooperating with the roll for transferring energy to the nonwoven web to cause the fibers or filaments thereof to fuse and form point bond sites in discrete areas where the web is contacted by the raised calender lands.

In a more specific embodiment, the apparatus includes a smooth, hard-surfaced anvil roll and a cooperating patterned embossing roll forming a calender nip. The patterned embossing roll includes a metallic cylindrical roll core having an outer surface with a multiplicity of raised calender lands which are spaced apart from one another by intervening depressions, the raised calender lands being present at a concentration of 40 to 500 lands per square inch **(**6.2 to 77.5 lands per square centimeter) and forming from 4 to 40 percent of the surface area of the embossing roll. The roll has a hard tie coating adhered to the surface of the roll core and overlying at least the depressions, and a fluoropolymer surface coating adhered to the tie coat. Means is provided for rotating the anvil roll and the embossing roll in opposite directions, and means is provided for maintaining the calender nip at a temperature of from 90 to 250 degrees C and at a pressure of 50 to 1500 pounds per linear inch (87 to 2627 N/cm). The nonwoven web is through the calender nip and the thermoplastic fibers or filaments thereof are thermally bonded in discrete areas corresponding to the raised calender lands.

### BRIEF DESCRIPTION OF THE DRAWINGS

Having thus described the invention in general terms, reference will now be made to the accompanying drawings, which are not necessarily drawn to scale, and wherein:
Figure 1 is a schematic side view of an apparatus for producing a thermally bonded nonwoven web according to one embodiment of the present invention;
Figures 2A and 2B show cross sectional views of two types of fibers used in forming nonwoven webs according to the present invention;
Figure 3 is a perspective side view of a pair of calender rolls and a portion of a nonwoven web according to one embodiment of the present invention;
Figure 4 is a greatly enlarged perspective view of a portion of one of the calender rolls shown in Figure 3;
Figure 5 is a greatly enlarged cross sectional view of a portion the a calender roll; and
Figure 6 is a perspective side view of a calender roll having a plasma coating of a fluoropolymer applied thereto.

### DETAILED DESCRIPTION OF THE INVENTION

The present invention now will be described more full whereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

The present invention is directed to an apparatus and method for bonding a nonwoven web with a geometrically repeating pattern of bonded regions. The bonded regions are surrounded by unbonded regions so that a recognizable pattern is created. The individual bonded regions preferably form from 4 to 40 percent of the surface area of the fabric and may be present in concentrations of about 40 to 500 zones per square inch (6.2 to 77.5 per cm²), more desirably about 100 to 300 per square inch (15.5 to 46.5 per cm²). according to one embodiment of the present invention. In the bonded regions, the fibers or filaments of the nonwoven web soften and fuse together. The bonds created by the bonding zones imparts useful qualities to the fabric, such as web strength, surface abrasion resistance, and dimensional stability. Because the fibers or filaments at the bond sites can be heated to a higher temperature without sticking to the roll, a botter and more complete fusion bond can be formed. The distinctly identifiable bond patterns can also be used as identification marks, such as to identify fabric characteristics or source of origin, and for alignment or demarcation points to assist in the assembly or production of textile products.

The present invention is applicable to thermally bonded nonwoven webs produced by various methods of manufacture commonly used in the nonwovens industry, including carding, air-laying, wet-laying, melt blowing, and spunbonding, or combinations of these methods. As is well known, carded, air-laid, and wet-laid webs are formed from fibers of discrete length, i.e. staple fibers. Spunbond webs are formed from fibers of substantially continuous length, i.e. continuous filaments, which are randomly arranged to form a web.

The fibers of the nonwoven webs are formed from one or more thermoplastic polymers that are capable of forming fusion bonds by application of pressure and heat or ultrasonic energy. Examples of such polymers include polyolefins such as polypropylene and polyethylene, polyesters such as polyethylene terephthalate, nylons such as nylon 6 and nylon 66, and combinations or blends of such polymers. The fibers or filaments may be formed entirely from a single polymer or from two or more polymers, which may form separate polymer phases. The present invention is especially advantageous when used for bonding fibers which are difficult to bond by conventional bonding methods, such as lower-melting polymers that melt below about 140°C. Examples of such lower-melting polymers include polyethylene (high density polyethylene or HDPE, low density polyethylene or LDPE, and linear low density polyethylene or LLDPE). For purposes of the present invention, the melting point can be determined by differential scanning calorimetry (DSC). A method for measuring melting point by DSC is taught by Perkin Elmer of Norwalk Conn. in their publication DSC 7 Differential Scanning Calorimeter 7 Series Thermal Analysis System.

The present invention is also useful with low crystallinity polymers that exhibit low softening points, such as certain polypropylene copolymers, ethylene vinyl acetate (EVA) and a variety of amorphous materials that are used as adhesives. The present invention is particularly applicable to fibers which include a lower melting polymer component that melts below 140°C and one or more higher melting polymer components. The polymer components are arranged as distinct phases in the cross-section of the fiber to form multiconstituent or multicomponent fibers. For example, the fibers can be multiconstituent fibers, as described for example in Gessner U.S. Patent 5,107,827 where the lower-melting component is present as a discontinuous dispersed phase in a continuous phase of a polymer component that melts at a higher temperature. Alternatively, the polymer components can include a primary continuous phase of a lower-melting polymer such as polyethylene in which is dispersed one or more higher melting polymer components. In another embodiment, the fibers can be multicomponent fibers, wherein the polymer components are disposed in specific locations within the fiber cross-section and extend continuously along the fiber length. A particularly preferred form of multicomponent fiber for use in the present invention is a sheath-core bicomponent fiber wherein the higher-melting polymer component is present in the core and the lower-melting component surrounds the core component to form a sheath. The core component can be formed of polypropylene and the sheath from polyethylene.

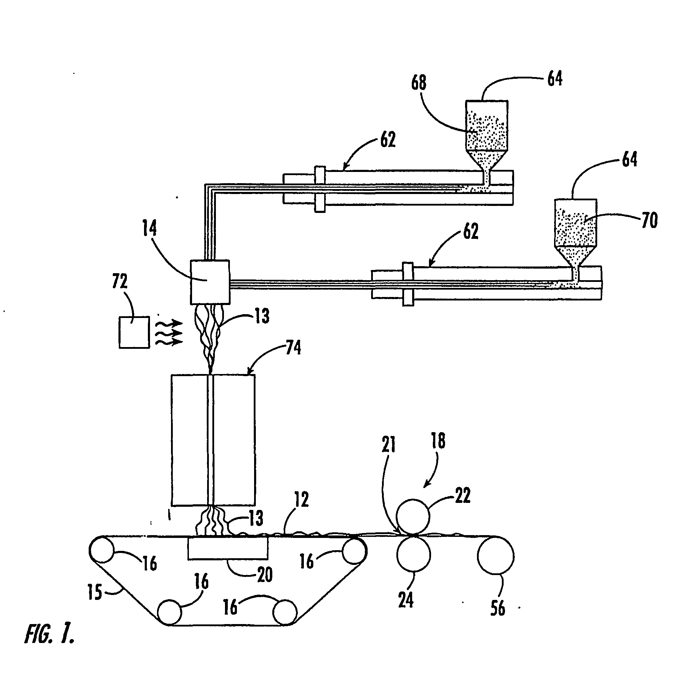

Figure 1 shows part of an apparatus **10** for producing a thermally bonded nonwoven web **12** in accordance with one embodiment of the present invention, wherein the web is a spunbond nonwoven web. More particularly, in this embodiment the web **12** is formed of randomly arranged bicomponent filaments **13** that are prepared by a pair of extruders **62** that supply two different polymeric materials **68, 70** from hoppers **64** to a bicomponent spinneret **14.** The two materials combine in the spinneret to form a sheath-core configuration. Spinnerets for producing bicomponent filaments are well known in the art and, therefore, are not described herein in detail. In one known embodiment, for example, the spinneret includes a housing about a spin pack, which includes a plurality of vertically stacked plates having a pattern of openings arranged to create flow paths for directing the two polymers separately to the fiber-forming openings in the spinneret. The fiber forming openings are arranged in one or more rows, and the openings form a downwardly extended curtain of filaments **13** when the polymers are extruded through the spinneret **14.** As the filaments **13** exit the spinneret **14,** they are contacted by a quenching gas **72,** which is typically air, from one or both sides of the filament curtain, which at least partially quenches the filament. Typically, the quenching gas **72** will be directed generally perpendicularly to the length of the filaments **13** at a velocity of from about 30 to about 120 meters per minute and that a temperature of about 7°C to about 32°C. In addition, a fiber draw unit or aspirator **74** can be positioned below the spinneret 14 for drawing and attenuating the filaments **13.** The filaments are generally continuous and have diameters larger than about 7 microns and, more particularly, between about 10 and 30 microns.

The filaments **13** are deposited in a substantially random manner onto a moving carrier belt **15** that is driven over a set of rollers **16** by a conventional drive source (not shown) to form the web **12.** Appropriate suction means **20** may be present under the carrier belt **15** away from the spinneret assembly **14** to assist depositing the filaments **13.** It should be noted that while a single spinneret assembly and single layer filament web is shown, it is possible to provide additional spinning assemblies in-line to form a heavier web or a multi-layer web.

The advancing web **12** passes from the carrier belt **15** and is directed into and through a pressure nip **21** formed by calender rolls **18** comprising a heated embossing roll **22** and a hard-surfaced anvil roll **24.** The embossing roll **22** is internally heated in a conventional manner, such as by circulation of a heat transfer fluid through the interior of the roll. The anvil roll **24** may also be heated in a similar manner. The time, temperature and pressure conditions at the calender nip are sufficient to heat the fibers or filaments to cause them to fuse and bond together, producing discrete fusion bond sites corresponding to the pattern of the embossing roll. The web **12** is directed past the calender rolls **18,** such as to take-up roll **56.**

In an alternative embodiment, not shown, the energy needed to produce fusion bonding of the fibers or filaments can be supplied from an ultrasonic source, such as an ultrasonic horn, mounted opposite the embossing roll **22** in lieu of the anvil roll **24.**

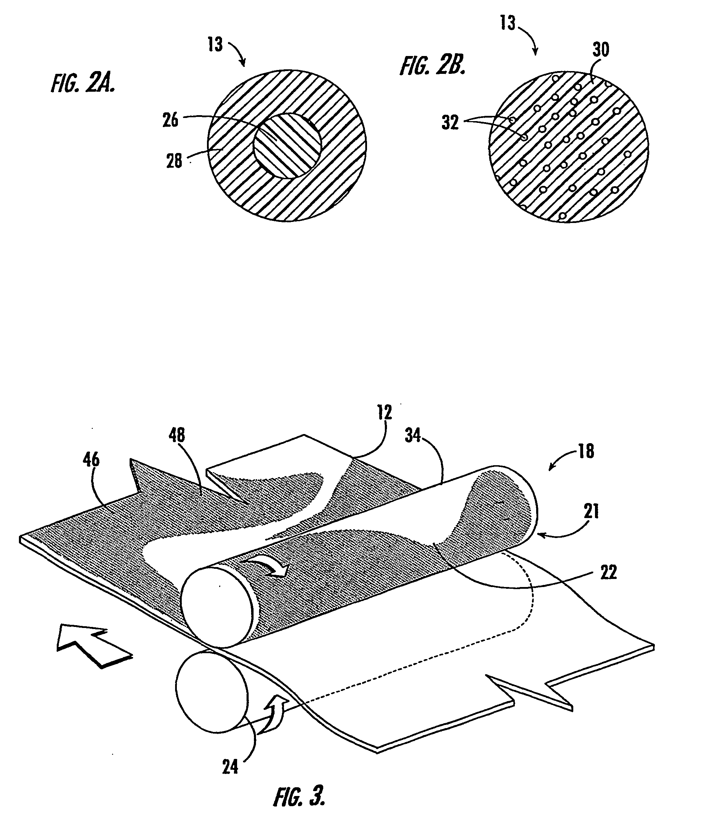

Figures 2A and 2B show two cross sectional examples of fibers according to the present invention. In particular, Figures 2A and 2B show fibers formed from at least two different polymers arranged as distinct phases in the cross section of the fiber. Figure 2A shows a sheath-core bicomponent structure having a core **26** of a higher melting point polymer, such as polypropylene, and a sheath **28** of a lower melting point polymer, such as polyethylene. The properties of the core **26** and sheath **28** are advantageous to particular manufacturing processes, as discussed below. Figure 2B shows a multiconstituent fiber formed from a highly dispersed blend of at least two different immiscible thermoplastic polymers in which a discontinuous phase **32** of a lower melting point polymer is dispersed in a dominant continuous polymer phase **30** of a higher melting point polymer. The discontinuous phase **32** occupies at least a portion of the fiber surface.

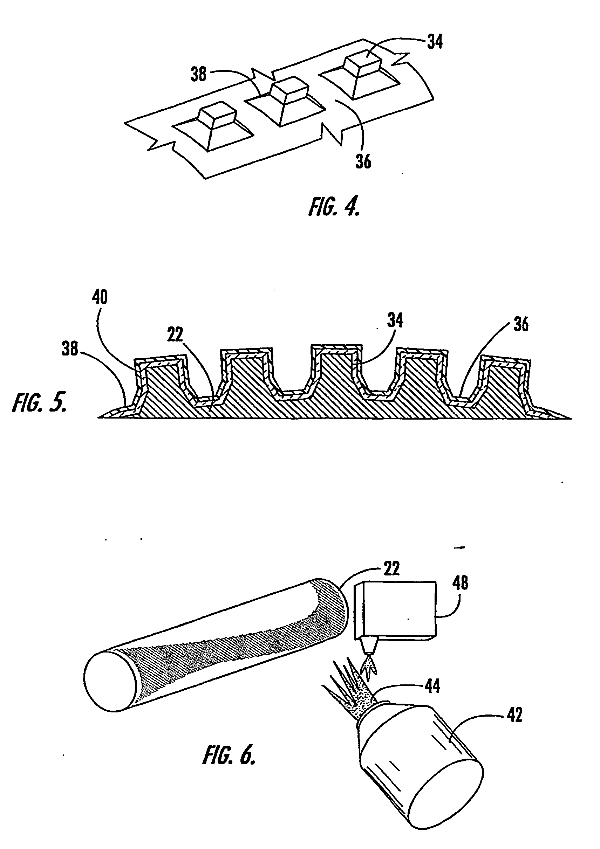

Figures 3 and 4 show views of the embossing roll **22** and anvil roll **24** according to one embodiment of the present invention. The embossing roll **22** is formed of metal and has an outer surface defining a multiplicity of raised calender lands **34.** The lands **34** are spaced apart from one another by intervening depressions **36** so as to impart a repeating Pattern on the web **12** as the web is directed through the nip **21.** The lands form from about 4% to 40% of the surface area of the embossing roll **22.** For hygiene applications, such as diaper topsheet, the lands preferably form a bond area of from about 10% to 30% at a density of about 100 to 300 lands per square inch (15.5 to 46.5 per cm²). The embossing roll **22** may be produced from well known materials, such as steel, by engraving the outer surface of the roll to define the plurality of lands **34** according to a geometrically repeating pattern.

The embossing roll **22** has a hard, solid, non-sticking surface coating **38** of a fluoropolymer material permanently bonded to the roll surface. The coating should cover at least the depressions **36,** but may suitably cover both the lands **34** and the intervening depressions **36.** The surface coating **38** preferably comprises a fluoropolymer such as the polytetrfluoroethylene polymer so d under the trademark TEFLON™ and manufactured by Dupont. Other suitable fluoropolymers include hexafluoropropylene, monochlorotrifluoroethylene, or tetrafluoroethylene-hexafluoropropylene copolymer. Preferably, the coated embossing roll **22** has a Rockwell C hardness of **35** or greater, and most preferably **45** or greater. As is known in the art, the Rockwell C hardness test uses a diamond cone that is loaded against the surface of a material at 150 kg. and the depth of penetration of the cone is measured by testing machine and converted to a Rockwell hardness number. To attain the desired surface hardness, a hard tie coating **40** is preferably applied directly to the engraved roll surface, and the fluompolymer surface coating **38** is applied to the tie coating **40.** Examples of suitable hard tie coatings include ceramic compositions, carbides, molybdenum, nickel-chromium, stainless steel, and nickel. The tie coating **40** provides good adherence to the surface of the steel roll and is also adherent to the fluoropolymer surface coating **38.**

Figure 5 shows a cross sectional view of a portion of the embossing roll **22** having the outer surface thereof coated with the fluoropolymer surface coating **38** over the lands **34** and intervening depressions **36.** In addition, Figure 5 shows a hard tie coating **40** that is adhered to the surface of the roll **22** and interposed between the surface coating **38** and the roll whereby the surface coating is adhered to the tie coating. The tie coating **40,** however, is not required, and the surface coating **38** can be adhered directly to the embossing roll **22**. In either case, the surface coating **38** and tie coating **40** each have a thickness of no more than about 5 mils (0.13 mm), for a total coating thickness of preferably no more than about **10** mils (0.26 mm).

The tie coating **40** and the fluoropolymer surface coating **38** are most advantageously applied to the roll by a plasma spray coating process. Figure 6 schematically illustrates a method of applying the surface coating **38** and/or tie coating **40** to the roll by plasma spray coating. In particular, the embossing roll **22** is subjected to a plasma coating process that includes directing a high temperature plasma stream **44** from a plasma torch **42** towards the surface of the embossing roll. The plasma stream **44** can reach temperatures of between 10,000 degrees and 50,000 degrees F. Powder of the surface coating **38** or tie coating **40** is injected from a supply **48** into the plasma stream **44,** where it is rapidly heated and accelerated to a high velocity. The molten powder impacts on the surface of the embossing roll **22** and rapidly cools to form a coating. Advantageously, the plasma spray process is called a "cold process" because the temperature of the substrate, i.e., the embossing roll **22,** can be kept low during processing, which protects the roll from damage, metallurgical changes, and distortion to the roll surface. Plasma torches are known in the art, such as plasma spray torches manufactured by ESAB Welding and Cutting Products of Florence, South Carolina.

The temperature of the nip **21** formed by the embossing roll **22** and anvil roll **24,** as well as the nip pressure, should be selected and maintained so as to effectively bond the fibers forming the web **12** without causing deleterious side effects, such as excessive melting, which causes fuzzing and reduced life span of the web. The presence of the fluoropolymer surface coating on the roll makes it possible to operate the calender at a considerably higher temperature than would be possible with a bare metal engraved roll without causing undesirable calender stack wraps. In fact, the calender can be operated at a temperature well above the melting temperature of the lower-melting polymer component. As a result, the effective bonding window is significantly broadened. In a preferred embodiment using sheath-core bicomponent fibers which include a polypropylene core and a polyethylene sheath, the nip **21** is maintained at a temperature of from about 90-160 degrees C, and maintained at a pressure of about 50-1500 pounds per linear inch (87 to 2627 N/cm).

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A process for bonding a nonwoven web comprising:
forming a nonwoven web of thermoplastic fibers or filaments containing a polymer which melts below 140°C;
forming a calender nip between a smooth, hard-surfaced anvil roll and a cooperating patterned embossing roll, the patterned embossing roll including a metallic cylindrical roll core having an outer surface with a multiplicity of raised calender lands which are spaced apart from one another by intervening depressions, the raised calender lands being present at a concentration of 40 to 500 lands per square inch (6.2 to 77.5 lands per square centimeter) and forming from 4 to 40 percent of the surface area of the embossing roll, and the roll having a hard tie coating adhered to the surface of said roll core and overlying at least said depressions, and a fluoropolymer surface coating adhered to sa id tie coating;
rotating the anvil roll and the embossing roll in opposite directions;
maintaining the calender nip at a temperature of from 90 to 250 degrees C and at a pressure of 50 to 1500 pounds per linear inch (87 to 2027 N/cm); and
directing the nonwoven web through the calender nip and thermally bonding the thermoplastic fibers or filaments thereof in discrets areas corresponding to the raised calender lands.

2. A process according to claim 1, wherein said the coating and said fluoropolymer surface coating each have a thickness of no more than about 5 mils (0.13 mm).

3. A process according to claim 1, wherein the step of forming a nonwoven web comprises forming the fibers from at least two different polymers arranged as distinct phases in the cross-section of the fiber.

4. A process according to claim 3, wherein the fibers are formed as sheath-core structured bicomponent fibers having a sheath of said polymer which melts below 140°C and a core of a higher melting point polymer.

5. A process according to claim 3, wherein the the moplastic fibers comprise sheath-core structured bicomponent fibers having a polypropylene core and a polyethylene sheath.

6. A process according to claim 3, wherein the fibers are formed from a highly dispersed blend of at least two different immiscible thermoplastic polymers and have a dominant continuous polymer phase of a higher melting point polymer in which is dispersed a discontinuous phase of said polymer which melts below 140°C, and wherein said lower melting point discontinuous phase occupies a portion of the surfaces of the fibers.

7. A process according to claim 1, wherein the outer exposed surface of the embossing roll has a Rockwell C hardness of 35 or greater.

8. An apparatus for producing a thermally bonded nonwoven web comprising:
means for forming a nonwoven web of thermoplastic fibers or filaments containing a polymer which melts below 140°C;
a smooth, hard-surfaced anvil roll and a cooperating pattemed embossing roll forming a calender nip, the patterned embossing roll including a metallic cylindrical roll core having an outer surface with a multiplicity of raised calender lands which are spaced apart from one another by intervening depressions, the raised calender lands being present at a concentration of 40 to 500 lands per square inch (6.2 to 77.5 lands per square centimeter) and forming from 4 to 40 percent of the surface area of the embossing roll, and the roll having a hard tie coating adhered to the surface of said roll core and overlying at least said depressions, and a fluoropolymer surface coating adhered to said tie coat;
means for rotating the anvil roll and the embossing roll in opposite directions;
means for maintaining the calender nip at a temperature of from 90 to 250 degrees C and at a pressure of 50 to 1500 pounds per linear inch (87 to 2627 N/cm); and
means for directing the nonwoven web through the calander nip and thermally bonding the thermoplastic fibers or filaments thereof in discrete areas corresponding to the raised calender lands.

9. Apparatus according to claim 8, wherein said the coating and said fluoropolymer each have a thickness of no more than about 5 mils (0.13 mm).

10. Apparatus according to claim 9, wherein said hard the coating and said fluoropolymer surface coating overlie both said lands and said depressions.

11. Apparatus according to claim 8, wherein said the coating is a composition selected from the group consisting of ceramic compositions, carbides, molybdenum, nickel-chromium, stainless steel, and nickel.

12. Apparatus according to claim 8, wherein the outer exposed surface of the embossing roll has a Rockwell C hardness of 35 or greater.

13. Apparatus according to claim 12, wherein the surface coating of fluoropolymer is selected from the group consisting of polytetrafluoroethylene hexafluoropropylene, monochlorotrifluoroethylene, or tetrafluoroethylene-hexafluoropropylene copolymer.

14. Apparatus according to claim 8, wherein the means for forming a nonwoven web includes means for forming the fibers from at least two different polymers arranged as distinct phases in the cross-section of the fiber.

15. Apparatus according to claim 14, wherein the means for forming fibers comprises means for forming sheath-core structured bicomponent fibers having a sheath of said polymer which melts below 140°C and a core of a higher melting point polymer.

16. Apparatus according to claim 15, wherein the means for forming fibers comprises means for forming bicomponent fibers having a polypropylene core and a polyethylene sheath.

17. Apparatus according to claim 14, wherein the means for forming fibers comprises means for forming fibers from a highly dispersed blend of at least two different immiscible thermoplastic polymers having a dominant continuous polymer phase of a higher melting point polymer in which is dispersed a discontinuous phase of said polymer which melts below 140°C, and wherein said lower melting point discontinuous phase occupies a portion of the surfaces of the fibers.

## Patentansprüche

1. Ein Verfahren zur Bindung einer Vliesstoffbahn, aufweisend;
- Formen einer Vliesstoffbahn aus thermoplastischen Fasern oder Filamenten; die ein Polymer aufweisen, welches unterhalb von 140° Celsius schmilzt;
- Bilden eines Kalanderspaltes zwischen einer glatten oberflächenhartert Gegenwalze und einer zusammenwirkenden profilierten Prägewalze, wobei die strukturlerte Prägewalze einen metallischen zylindrischen Walzenkern enthält, der eine äußere Oberfläche mit einer Vielzahl an erhobenen Kalanderflächen aufweist, die jeweils von einander durch zwischenangeordnete Senken getrennt sind, die erhobenen Kalanderflächen sind in einer Konzentration von 40 bis 500 Flächen je Square Inch (6.2 bis 77.5 Flächen je cm²) vorhanden und bilden von 4 % bis 40 % der Oberfläche der Prägewalze, und die Walze weist eine Hartbindebeschichtung auf, die gebunden an der Oberfläche des Walzenkems aufgebracht ist und zumindest die Senken überdeckt, und eine Fluorpolymeroberflächenbeschichtung, die zu der Bindebeschichtung gebunden ist;
- Drehen der Gegenwalze und der Prägewalze in entgegengesetzte Richtungen;
- Aufrechterhalten des Kalanderspaltes bei einer Temperatur von 90° bis 250° C und mit einem Druck von 50 bis 150 Pounds je Linear Inch (87 bis 2627 N/cm); und
- Führen der Vllesstoffbahn durch den Kalanderspalt und dabei thermisches Verbinden der thermoplastischen Fasern oder Filamente in diskreten Bereichen, die zu den erhobenen Kalanderflächen korrespondieren.

2. Verfahren gemäß Anspruch 1, wobei die Bindebeschichtung und die Fluorpolymeroberflächenbeschichtung jeweils eine Dicke von nicht mehr als ungefähr 5 mils (0,13 mm) aufweisen.

3. Verfahren gemäß Anspruch 1, wobei der Schritt des Bildens einer Vliesstoffbahn ein Bilden der Fasern von zumindest zwei verschiedenen Polymeren umfasst, die in getrennten Phasen über den Querschnitt der Faser angeordnet sind.

4. Verfahren gemäß Anspruch 3, wobei die Fasern als Kern-Mantel-strukturlerte Bikomponentenfasem gebildet werden, die einen Mantel aus dem Polymer haben, das unterhalb 140° C schmilzt, und einen Kem eines Polymers mit einem höheren Schmelzpunkt.

5. Verfahren gemäß Anspruch 3, wobei die thermoplastischen Fasern Kern-Mantelstrukturierte Blkomponentenfasem aufweisen, die einen Polypropylenkern und einen Polyethylenmantel haben.

6. Verfahren gemäß Anspruch 3, wobei die Fasern gebildet werden aus einer hochdispersen Mischung von zumindest zwei verschiedenen nichtmischbaren thermoplastischen Polymeren und aufweisend eine dominante kontinuierliche Polymerphase eines höher schmelzpunktbehafteten Polymers, in welchem eine diskontinuierliche Phase des Polymers dispergiert ist, welche unterhalb von 140 °C schmilzt, und wobei die mit einem niedrigeren Schmelzpunkt behaftete diskontinuierliche Phase einen Bereich der Oberflächen der Fasern beansprucht,

7. Verfahren gemäß Anspruch 1, wobei die äußere exponierte Oberfläche der Prägewalze eine Rockwellhärte C von 35 oder mehr hat.

8. Vorrichtung zur Herstellung einer thermisch gebundenen Vliesstoffstoffbahn, aufweisend:
- Mittel zur Bildung einer Vliesstoffbahn aus thermoplastischen Fasern oder Filamenten, aufweisend ein Polymer, welches unterhalb von 140° C schmilzt;
- eine glatte, oberflächenharte Gegenwalze und eine zusammenwirkende gemusterte Prägewalze, die einen Kalanderspalt formen, die gemusterte Prägewalze enthält einen metallischen zylindrischen Walzenkern, der eine äußere Oberfläche mit einer Vielzahl an erhobenen Kalanderflächen aufweist, die voneinander jeweils durch zwischenangeordnete Senken getrennt sind, die erhobenen Kalanderflächen sind In einer Dichte von 40 bis 500 Flächen je Square Inch (6.2 bis 77.5 Flächen je cm²) vorhanden und Bilden von 4% bis 40 % der Oberfläche der Prägewalze, und die Walze weist eine Hartbindebeschichtung auf, die auf der Oberfläche des Walzenkerns anhaftet und zumindest über den Senken aufliegt, und eine Fluorpolymeroberflächenbeschichtung ist mit der Hartbeschichtung verbunden;
- Mittel zum Drehen der Gegenwalze und der Prägewalze In entgegengesetzte Richtungen;
- Mittel zur Aufrechterhaltung des Kalanderspaltes bei einer Temperatur von 90° bis 250° C und bei einem Druck von 50 bis 1500 Pounds je Linear Inch (87 - 2627 N/cm): und
- Mittel zur Führung der Vliesstoffbahn durch den Kalanderspalt und dabei thermischen Binden der thermoplastischen Fasern oder Filamente in diskreten Bereichen entsprechend der erhobenen Kalanderflächen.

9. Vorrichtung gemäß Anspruch 8, wobei die Bindebeschichtung und das Fluorpolymer jeweils eine Dicke von nicht mehr als 5 mils (0,13 mm) aufweisen.

10. Vorrichtung gemäß Anspruch 9, wobei die Hartbindebeschichtung und die Fluorpolymeroberflächenbeschichtung beides, die Flächen und die Senken, überlagern.

11. Vorrichtung gemäß Anspruch 8, wobei die Bindebeschichtung eine Mischung ist, die aus der Gruppe ausgewählt ist, die aus keramischen Mischungen, Karbiden, Molybdenium, Nickel-Chrom, rostfreiem Stahl und Nickel besteht.

12. Vorrichtung gemäß Anspruch 8, wobei die äußere exponierte Oberfläche der Prägewalze eine Härte Rockwell C von 35 oder mehr hat.

13. Vorrichtung gemäß Anspruch 12, wobei die Oberflächenbeschichtung aus Fluorpolymer aus der Gruppe gewählt ist, die aus Polytetrafluorethylen, Hexafluorpropylen, Monochlortrifluorethylen oder Tetrafluorethylen-Hexafluorpropylencopolymer besteht.

14. Vorrichtung gemäß Anspruch 8, wobei die Mittel zur Bildung einer Vliesstoffbahn Mittel zur Blidung der Fasern von zumindest zwei verschledenen Polymeren aufweist, die in getrennten Phasen über den Querschnitt der Faser angeordnet sind.

15. Vorrichtung gemäß Anspruch 14, wobei die Mittel zur Bildung der Fasern Mittel zur Bildung von Kern-Mantel-strukturierten Bikomponentenfasern aufweisen, die einen Mantel aus dem Polymer haben, das unterhalb von 140° C schmilzt, und einen Kern aus einem Polymer mit höherem Schmelzpunkt haben.

16. Vorrichtung gemäß Anspruch 15, wobei die Mittel zur Bildung von Fasern Mittel zur Bildung von Bikomponentenfasem aufwelsen, die einen Polypropylenkern und einen Polyethylenmantel haben.

17. Vorrichtung gemäß Anspruch 14, wobei die Mittel zur Bildung von Fasern Mittel zur Bildung von Fasern aus einer hochdispersierenden Mischung von zumindest zwei verschiedenen nichtrnischbaren thermoplastischen Polymeren aufweist, die eine dominante kontinuierliche Polymerphase eines mit einem höheren schmeizpunktbehafteten Polymer aufweist, in welcher eine diskontinuierliche Phase des Polymers dispergiert ist, welches unterhalb von 140° C schmilzt, und wobei die mit einem niedrigeren Schmelzpunkt behaftete diskontinuierliche Phase einen Bereich der Oberflächen der Fasern beansprucht.

## Revendications

1. Procédé de liaison d'une bande non tissée comprenant :
la formation d'une bande non tissée de fibres ou de filaments thermoplastiques contenant un polymère qui fond en dessous de 140°C ;
la formation d'un point de pincement de calandrage entre un contre-cylindre lisse à surface dure et un rouleau gaufreur gravé coopérant, le rouleau gaufreur gravé comprenant un noyau de rouleau cylindrique métallique ayant une surface extérieure munie d'une multiplicité d'appuis de calandrage surélevés qui sont espacés les uns des autres par des creux insérés, les appuis de calandrage surélevés étant présents à une concentration de 40 à 500 appuis par pouce carré (6,2 à 77,5 appuis par centimètre carré) et formant de 4 à 40 pour cent de la superficie du rouleau gaufreur, et le rouleau ayant une couche de liaison dure collée à la surface dudit noyau de rouleau et recouvrant au moins lesdits creux, et un revêtement de surface de polymère fluoré collé à ladite couche de liaison ;
la rotation du contre-cylindre et du rouleau gaufreur dans des directions opposées ;
le maintien du point de pincement de calandrage à une température de 90 à 250°C et à une pression de 50 à 1500 livres par pouce linéaire (87 à 2627 N/cm) ; et
le guidage de la bande non tissée à travers le point de pincement de calandrage et la liaison thermique des fibres ou filaments thermoplastiques de celle-ci dans des régions discrètes correspondant aux appuis de calandrage surélevés.

2. Procédé selon la revendication 1, dans lequel: ladite couche de liaison et ledit revêtement de surface de polymère fluoré ont chacun une épaisseur non supérieure à environ 5 mils (0,13 mm).

3. Procédé selon la revendication 1, dans lequel l'étape de formation d'une bande non tissée comprend la formation des fibres à partir d'au moins deux polymères différents agencés en phases distinctes dans la section transversale de la fibre.

4. Procédé selon la revendication 3, dans lequel les fibres sont formées comme des fibres bicomposants de structure enveloppe-noyau ayant une enveloppe dudit polymère qui fond en dessous de 140°C et un noyau d'un polymère à point de fusion plus élevé.

5. Procédé selon la revendication 3, dans lequel les fibres thermoplastiques comprennent des fibres bicomposants de structure enveloppe-noyau ayant un noyau de polypropylène et une enveloppe de polyéthylène.

6. Procédé selon la revendication 3, dans lequel les fibres sont formées à partir d'un mélange fortement dispersé d'au moins deux polymères thermoplastiques immiscibles différents et ont une phase polymère continue dominante d'un polymère à point de fusion plus élevé dans laquelle est dispersée une phase discontinue dudit polymère qui fond en dessous de 140°C, et dans lequel ladite phase discontinue à point de fusion plus bas occupe une partie des surfaces des fibres.

7. Procédé selon la revendication 1, dans lequel la surface exposée extérieure du rouleau gaufreur possède une dureté Rockwell C de 35 ou plus.

8. Appareil de production d'une bande non tissée thermiquement liée comprenant :
des moyens pour former une bande non tissée de fibres ou de filaments thermoplastiques contenant un polymère qui fond en dessous de 140°C ;
un contre-cylindre lisse à surface dure et un rouleau gaufreur gravé coopérant formant un point de pincement de calandrage, le rouleau gaufreur gravé comprenant un noyau de rouleau cylindrique métallique ayant une surface extérieure munie d'une multiplicité d'appuis de calandrage surélevés qui sont espacés les uns des autres par des creux insérés, les appuis de calandrage surélevés étant présents à une concentration de 40 à 500 appuis par pouce carré (6,2 à 77,5 appuis par centimètre carré) et formant de 4 à 40 pour cent de la superficie du rouleau gaufreur, et le rouleau ayant une couche de liaison dure collée à la surface dudit noyau de rouleau et recouvrant au moins lesdits creux, et un revêtement de surface de polymère fluoré collé à ladite couche de liaison ;
des moyens pour faire tourner le contre-cylindre et le rouleau gaufreur dans des directions opposées ;
des moyens pour maintenir le point de pincement de calandrage à une température de 90 à 250°C et à une pression de 50 à 1500 livres par pouce linéaire (87 à 2627 N/cm) ; et
des moyens pour guider la bande non tissée à travers le point de pincement de calandrage et lier thermiquement les fibres ou filaments thermoplastiques de celle-ci dans des régions discrètes correspondant aux appuis de calandrage surélevés.

9. Appareil selon la revendication 8, dans lequel ladite couche de liaison et ledit polymère fluoré ont chacun une épaisseur non supérieure à environ 5 mils (0,13 mm).

10. Appareil selon la revendication 9, dans lequel ladite couche de liaison dure et ledit revêtement de surface de polymère fluoré recouvrent à la fois lesdits appuis et lesdits creux.

11. Appareil selon la revendication 8, dans lequel ladite couche de liaison est une composition choisie dans le groupe constitué par les compositions céramiques, les carbures, le molybdène, le nickel-chrome, l'acier inoxydable et le nickel.

12. Appareil selon la revendication 8, dans lequel la surface exposée extérieure du rouleau gaufreur possède une dureté Rockwell C de 35 ou plus.

13. Appareil selon la revendication 12, dans lequel le revêtement de surface de polymère fluoré est choisi dans le groupe constitué par le polytétrafluoroéthylène, l'hexafluoropropylène, le monochlorotrifluoroéthylène ou le copolymère tétrafluoroéthylène-hexafluoropropylène.

14. Appareil selon la revendication 8, dans lequel les moyens pour former une bande non tissée comprennent des moyens pour former les fibres à partir d'au moins deux polymères différents agencés en phases distinctes dans la section transversale de la fibre.

15. Appareil selon la revendication 14, dans lequel les moyens pour former des fibres comprennent des moyens pour former des fibres bicomposants de structure enveloppe-noyau ayant une enveloppe dudit polymère qui fond en dessous de 140°C et un noyau d'un polymère point de fusion plus élevé.

16. Appareil selon la revendication 15, dans lequel les moyens pour former des fibres comprennent des moyens pour former des fibres bicomposants ayant un noyau de polypropylène et une enveloppe de polyéthylène.

17. Appareil selon la revendication 14, dans lequel les moyens pour former des fibres comprennent des moyens pour former des fibres à partir d'un mélange fortement dispersé d'au moins deux polymères thermoplastiques immiscibles différents ayant une phase polymère continue dominante d'un polymère à point de fusion plus élevé dans laquelle est dispersée une phase discontinue dudit polymère qui fond en dessous de 140°C, et dans lequel ladite phase discontinue à point de fusion plus bas occupe une partie des surfaces des fibres.
